# EUROPÄISCHE PATENTANMELDUNG

(11) **EP 3 076 030 A1**
(43) Veröffentlichungstag der Anmeldung: **05.10.2016**
(21) Anmeldenummer: 15162508.4
(22) Anmeldetag: 02.04.2015
(51) Int. Cl.: F15B 15/28, G01D 5/48, G01B 7/02

(54) **POSITIONSMESSSYSTEM**

(71) Anmelder: SICK STEGMANN GmbH, 78166 Donaueschingen (DE)
(72) Erfinder: Hirt, Alexander, 78652 Lauffen (DE); Weber, Thomas, 77960 Seelbach (DE); Basler, Stefan, 78086 Brigachtal (DE)
(74) Vertreter: Ludewigt, Christoph

(57) **Zusammenfassung**

Die Erfindung betrifft ein Linearpositionsmesssystem zur Bestimmung einer Kolbenposition in einem druckbelasteten Zylinder (14) mit einer Antenne (22) an einem Zylinderende (18), das dem Kolben (12) gegenüberliegt, zum Aussenden von elektromagnetischer Strahlung (24) im Mikrowellenbereich, wobei die Antenne (22) in das Zylinderinnere (15) abstrahlt und der Zylinder (14) einen Mikrowellenleiter bildet und der Kolben (12) ausgebildet ist, die Strahlung (24) zu reflektieren und die Antenne (22) ausgebildet ist, die reflektierte Strahlung (26) zu empfangen, und mit einer außerhalb des Zylinderinneren (15) angeordneten Steuer- und Auswerteelektronik (28) zur Ansteuerung der Antenne (22) und zur Auswertung der von der Antenne (22) empfangenen Strahlung (26). Um ein verbessertes Messsystem bereitzustellen, welches insbesondere die Dichtungsproblematik zwischen druckbelasteten und druckentlasteten Bereich verbessert, wird vorgeschlagen, dass zwischen dem Zylinderinneren (15) und der Steuer- und Auswerteelektronik (28) eine galvanische Trennung (32) vorgesehen ist, die mittels feldgebundener Kopplung signaltechnisch überbrückt ist und zylinderinnenseitig der Kopplung der Zylinderinnendruck und außenseitig der Kopplung Umgebungsdruck herrscht.

## Beschreibung

Die Erfindung betrifft ein lineares Positionsmesssystem nach dem Oberbegriff des Anspruchs 1.

Positionsmesssysteme für Hydraulik- und Pneumatikzylinder basieren heute auf verschiedenen Technologien. Zum einen werden Standard-Linearmesssysteme auf optischer, magnetischer, induktiver und kapazitiver Basis verwendet, die aber häufig nicht die Anforderungen an Robustheit für die Anwendung erfüllen und sehr aufwändig im Anbau an den Zylinder bzw. die Applikation sind. So werden die dabei eingesetzten Sensoren meist extern an das Zylinderrohr montiert. Bewegt sich der Kolben in den Erfassungsbereich eines solchen Sensors, so erkennt dieser die Anwesenheit des Zylinderkolbens und zwar durch das Zylinderrohr hindurch. Hierfür ist überwiegend die Verwendung von nichtferromagnetischen Werkstoffen erforderlich und beschränkt somit die konstruktiven Eigenschaften bzw. Anwendungen des Antriebes. Soll hingegen eine andere Position des Kolbens detektiert werden, so muss der Sensor entsprechend mechanisch justiert bzw. neu justiert werden. Für jede zusätzlich zu erfassende Position muss folglich ein weiterer Sensor montiert werden, und zwar mit den damit verbundenen zusätzlichen Material-, Montage-, Justage- und Installationskosten.

Deswegen kommen bisher überwiegend Linearmesssysteme auf magnetostriktiver Basis in Zylindern zum Einsatz. Magnetostriktive Systeme haben jedoch den Nachteil, dass sie eine Bohrung im Zylinderkolben erfordern und an den jeweiligen Enden Bauraum benötigen, der die effektive Länge der Zylinder reduziert.

Wegen all dieser Nachteile gibt es in jüngster Zeit Überlegungen Linearmessgeräte auf Mikrowellenbasis einzusetzen. Dabei wird der zu messende Abstand durch Messung einer Phasendifferenz zwischen einem Sendesignal, das von einer an einem Zylinderende liegenden Antenne ausgesandt wird, und einem Empfangssignal, das durch Reflektion des Sendesignals am Kolben erzeugt und wieder von der Antenne empfangen wird, ermittelt.

Solche Messsysteme versprechen Vorteile, da sie robuster sind und wenig Bauraum erfordern, haben aber den Nachteil, dass die Antenne zur Abstrahlung und Empfang der Mikrowellen leitungsgebunden mit der zugehörigen Elektronik verbunden ist, was Probleme hinsichtlich der Durchführung der Leitung vom druckbelasteten Zylinderinnenraum zum druckentlasteten Außenbereich mit sich bringt. Ein solches gattungsgemäßes Messsystem auf Mikrowellenbasis ist aus der EP 1 474 651 B1 bekannt.

Ausgehend von diesem Stand der Technik ist es Aufgabe der Erfindung, ein verbessertes Messsystem bereitzustellen, welches insbesondere die Dichtungsproblematik zwischen druckbelasteten und druckentlasteten Bereich verbessert.

Diese Aufgabe wird gelöst mit einem Linearpositionsmesssystem mit den Merkmalen des Anspruchs 1. Ein erfindungsgemäßes Messsystem umfasst eine Antenne an einem Zylinderende, das dem Kolbenende gegenüberliegt, zum Aussenden von elektromagnetischer Strahlung im Mikrowellenbereich, wobei die Antenne in das Zylinderinnere abstrahlt und der Zylinder einen Mikrowellenleiter bildet. Das Kolbenende ist ausgebildet, die Strahlung zu reflektieren, und die Antenne ist ausgebildet, die reflektierte Strahlung zu empfangen. Außerhalb des Zylinderinneren ist eine Steuer- und Auswerteelektronik zur Ansteuerung der Antenne und zur Auswertung der von der Antenne empfangenen Strahlung angeordnet. Erfindungsgemäß ist zwischen dem Zylinderinneren und der Steuer- und Auswerteelektronik eine galvanische Trennung vorgesehen, die mittels feldgebundener Kopplung signaltechnisch überbrückt ist und zylinderinnenseitig der Kopplung der Zylinderinnendruck und außenseitig der Kopplung Umgebungsdruck herrscht.

In dieser Ausbildung können elektrische Durchführungen vermieden werden, so dass Dichtigkeitsprobleme erheblich reduziert werden können. Gerade bei den hohen Drücken in pneumatischen oder hydraulischen Zylindern ist das ein großer Vorteil. Die Mikrowellensignale werden dennoch aus dem Zylinderinneren bzw. den Bereichen, die fluidisch mit dem Zylinderinneren in Verbindung stehen, mittels magnetischer oder bevorzugt kapazitiver Feldkopplung herausgekoppelt.

In einer Ausführungsform erfolgt die galvanische Trennung, die auch gleichzeitig die Drucktrennung bildet, durch ein zwischen Antenne und dem Zylinderinneren vorgesehenes Dielektrikum. Dieses schließt somit den Zylinder zylinderkopfseitig ab. Die Antenne ist dann quasi außerhalb des Zylinderinneren angeordnet. Das Dielektrikum muss dann derart ausgebildet sein, dass die Mikrowellenstrahlung das Dielektrikum durchdringt und die Kopplung in und aus der Antenne feldgebunden, bevorzugt kapazitiv, erfolgen kann.

Vorteilhafterweise hat das Dielektrikum eine derartige Form, die die Kopplung fördert, z. B. eine bereichsweise kegelförmige Form, wobei die Kegelspitze in das Zylinderinnere gerichtet ist.

In einer weiteren bevorzugten Ausführungsform ist die Trennung zwischen der Antenne und der Steuer- und Auswerteelektronik vorgesehen. Die Leitung zwischen der Antenne und der Elektronik ist dann getrennt, wobei die Antennensignale die Trennstelle mittels magnetischer oder bevorzugt kapazitiver Feldkopplung überwinden können. So können die Antennensignale trotz galvanischer Trennung übetragen werden. Im kapazitiven Fall ist an der Trennstelle eine Kapazität gebildet. Die Trennstelle bildet dann auch gleichzeitig die Drucktrennung, indem beispielsweise im Bereich der kapazitiven Kopplung ein Dielektrikum vorgesehen ist, so dass auf der einen Seite Zylinderinnendruck und auf der anderen Seite Umgebungsdruck herrscht. Elektrische Durchführungen und die damit einhergehenden Dichtungsprobleme sind vermieden.

In Weiterbildung der Erfindung ist die Steuer- und Auswerteelektronik in einem stirnseitigen Kopf des Zylinders angeordnet, so dass insgesamt ein kompakter Zylinder mit integrierter Sensorik zur Kolbenpositionsbestimmung gegeben ist.

Im Folgenden wird die Erfindung anhand eines Ausführungsbeispiels unter Bezugnahme auf die Zeichnung im Einzelnen erläutert. In der Zeichnung zeigen:
- Fig. 1: zeigt eine schematische Schnittdarstellung einer ersten Ausführungsform des erfindungsgemäßen Positionsmesssystems;
- Fig. 2: zeigt eine schematische Schnittdarstellung einer zweiten Ausführungsform des erfindungsgemäßen Positionsmesssystems.
- Fig. 3: zeigt eine schematische Schnittdarstellung einer dritten Ausführungsform.

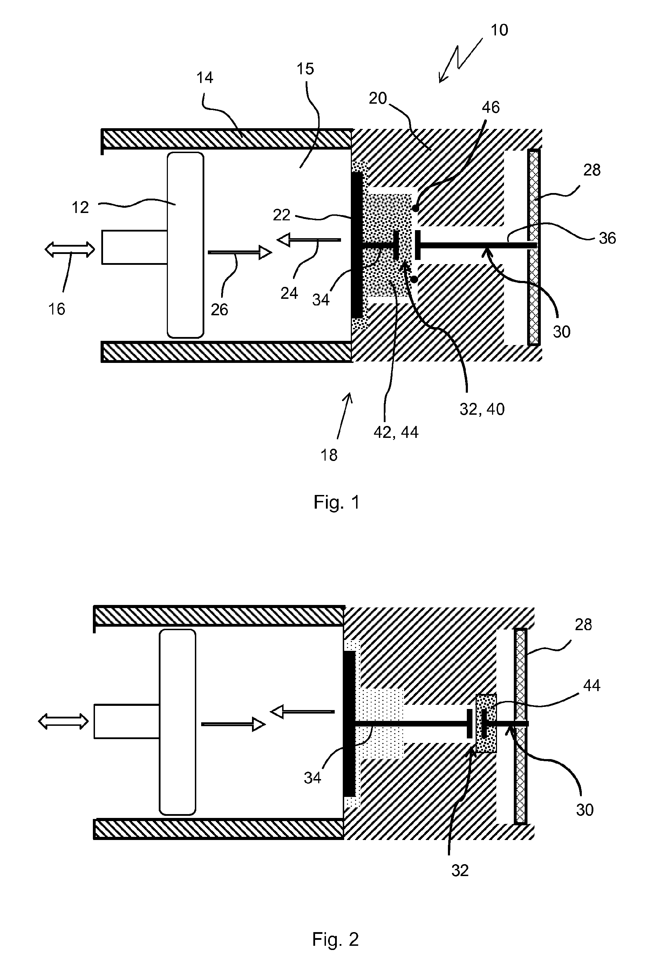

Ein in Fig. 1 schematisch dargestelltes, erfindungsgemäßes Linearpositionsmesssystem 10 dient zur Bestimmung einer Hubposition eines Kolbens 12 in einem druckbelasteten Zylinder 14, wobei der Kolbenhub in Zylinderlängsrichtung 16 erfolgt. Der Zylinder 14 kann ein pneumatischer, hydraulischer oder dgl. druckbelasteter Zylinder sein und ist in den Figuren jeweils nur mit seinem einen Ende 18 dargestellt, das mit meinem Zylinderkopf 20 verschlossen ist.

In dem Zylinderkopf 20 sind die für die Erfindung wesentlichen Komponenten aufgenommen. Eine Antenne 22 ist zylinderinnenseitig und damit an dem Zylinderende 18 vorgesehen. Sie liegt dem Kolben 12 gegenüber und dient zum Aussenden von elektromagnetischer Strahlung (dargestellt durch einen Pfeil 24) im Mikrowellenbereich. Die Antenne 22 ist in nicht dargestellter Weise an dem Zylinderkopf 20 befestigt und gegenüber diesem mittels eines Dielektrikums 42 isoliert. Die Antenne 22 strahlt die Strahlung 24 in das Zylinderinnere 15 ab, wobei der Zylinder 14 einen Mikrowellenleiter bildet. Der Kolben 12 ist ausgebildet, die Strahlung 24 zu reflektieren, und die Antenne 22 ist ausgebildet, die reflektierte Strahlung (dargestellt durch Pfeil 26) zu empfangen. Die Antenne 22 ist signaltechnisch mit einer Steuer- und Auswerteelektronik 28 (im Folgenden auch kurz Elektronik genannt) zur Ansteuerung der Antenne 22 und zur Auswertung der von der Antenne 22 empfangenen Strahlung 26 verbunden. Dazu ist eine Leitung 30 vorgesehen, die an einer Trennstelle 32 galvanisch in zwei Teile, einen antennenseitigen Teil 34 und einen elektronikseitigen Teil 36, getrennt ist. Die galvanische Trennung ist jedoch signaltechnisch überbrückt, indem die Leitung 30 kapazitiv getrennt ist, was heißen soll, dass an der Trennstelle 32 eine Kapazität 40 gebildet ist, so dass die Antennensignale trotz galvanischer Trennung übertragen werden können. Diese Trennstelle 32 bildet gleichzeitig die Drucktrennung zwischen Zylinderinnerem 15 und Umgebungsdruck. Dazu ist eine Trennwand 44 im Bereich der Kapazität 40 vorgesehen, die aus dem Dielektrikum 42 besteht. So liegt auf der einen Seite Zylinderinnendruck und auf der anderen Seite der Trennwand 42 Umgebungsdruck vor. Die Trennwand 44 ist durch geeignete Dichtmittel 46 druckdicht an den Zylinderkopf befestigt.

Fig. 2 zeigt eine weitere Ausführungsform, die der aus Fig. 1 sehr ähnlich ist mit dem Unterschied, dass die Trennstelle 32 jetzt näher an der Elektronik 28 vorgesehen ist und die Trennwand 44 jetzt getrennt ist von dem Material, in dem die Antenne 22 gelagert ist.

Die Kolbenpositionsmessung mittels Mikrowelle beruht auf dem folgenden Prinzip: Eine elektromagnetische Welle geeigneter Frequenz wird in den Zylinder 14 über die Antenne 22 eingekoppelt. Der Zylinder 14 selbst fungiert als Leitungsstruktur für die Welle. Die Welle läuft im Zylinder 14 bis zum Kolben 12, dessen Kolbenende, das der Antenne 22 gegenüberliegt, einen Reflektionskörper bildet, der ausgebildet ist, die elektromagnetische Strahlung 24 zu reflektieren. Am Kolben 12 wird die elektromagnetische Welle somit größtenteils reflektiert, da sich der Kolben 12 elektrisch ähnlich einem Kurzschluss verhält.

Die reflektierte Welle 26 läuft den Zylinder 14 zurück und wird über die selbe Antenne 22, über die auch die Einkopplung erfolgte, wieder aus dem Zylinder 14 ausgekoppelt. Der Phasenwinkel zwischen dem eingekoppelten und dem reflektierten Signal wird gemessen. Ändert der Kolben 12 seine Position, so ändert sich die Strecke, welche die elektromagnetische Welle im Zylinder 14 zurücklegt.

Durch die Streckenänderung kommt es zu einer Änderung der Signallaufzeit und damit auch zu einem anderen Phasenwinkel zwischen ausgesandter und reflektierter Welle. Deshalb kann die Phase zwischen ausgesandtem und reflektiertem Signal als Maß für die Kolbenposition verwendet werden.

Da bei einer Phasenmessung grundsätzlich nicht zwischen einem Phasenwinkel ϕ und ϕ+n*360° unterschieden werden kann, kann bei größerem Kolbenhub die Messung mehrdeutig sein. Da sich das Ausgangssignal also periodisch wiederholt, muss sichergestellt sein, dass die Positionssuche eindeutig verläuft, d. h. es muss eindeutig bestimmbar sein, in welcher Periode sich der Kolben befindet.

Eine Möglichkeit der Positionsbestimmung wäre die Aufnahme vieler Messwerte während eines Frequenzsweeps. Solange man bei der Aufnahme der Messwerte keine Unterabtastung zulässt, können bei diesem Verfahren keine Mehrdeutigkeitsprobleme auftreten. Nachteilig ist die Tatsache, dass zum einen eine relativ große Zahl von Messpunkten aufgenommen werden muss, und dass der Rechenaufwand relativ groß ist.

Eine andere Möglichkeit ist, bei verschiedenen Frequenzen zu messen und die Kolbenposition anhand von Positionstabellen zu bestimmen. Dabei werden einfach die gemessenen Werte mit den Werten der Punkte der Positionstabelle verglichen. Die ermittelte Position entspricht dann dem Tabellenwert, der den Messwerten am ähnlichsten ist. Werden die drei Messfrequenzen geschickt gewählt, so gibt es keine Kolbenpositionen, bei denen alle drei Messwerte identisch sind.

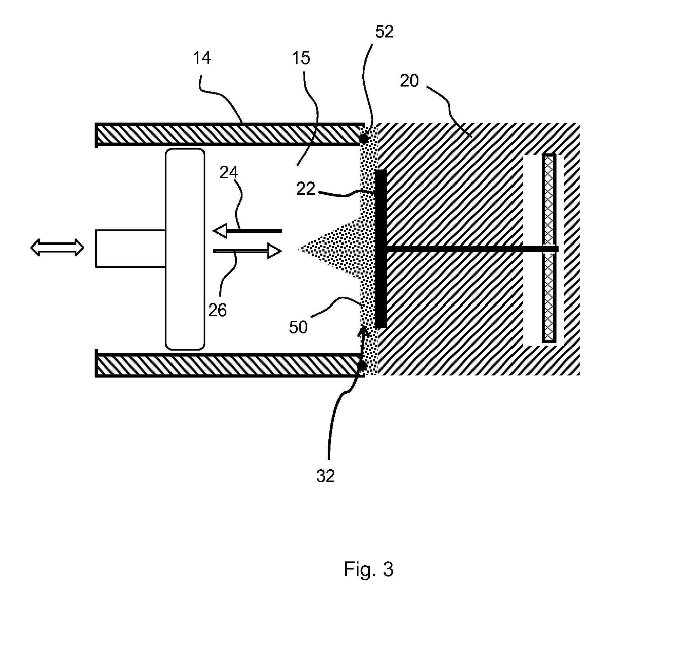

In Fig. 3 ist eine weitere Ausführungsform dargestellt, bei der die galvanische Trennung 32, die auch gleichzeitig die Drucktrennung bildet, durch ein zwischen Antenne 22 und dem Zylinderinneren 15 vorgesehenes Dielektrikum 50 bewerkstelligt ist. Das Dielektrikum 50 schließt somit den Zylinder 14 zylinderkopfseitig mittels geeigneter Dichtelemente 52 ab. Die Antenne 22 ist dann quasi außerhalb des Zylinderinneren 15 angeordnet. Das Dielektrikum 50 muss derart ausgebildet sein, dass die Mikrowellenstrahlung 24, 26 das Dielektrikum 50 durchdringt und somit erfindungsgemäß die Signalkopplung von der Antenne 22 in den Zylinderinnenraum 15 und umgekehrt kapazitiv erfolgen kann.

Zur besseren Ein- und Auskopplung kann es vorteilhafter sein, dass das Dielektrikum eine individuelle Form aufweist, beispielsweise eine bereichsweise kegelförmige Form, wobei die Kegelspitze in das Zylinderinnere gerichtet ist.

## Patentansprüche

1. Linearpositionsmesssystem zur Bestimmung einer Kolbenposition in einem druckbelasteten Zylinder (14) mit
- einer Antenne (22) an einem Zylinderende (18), das dem Kolben (12) gegenüberliegt, zum Aussenden von elektromagnetischer Strahlung (24) im Mikrowellenbereich, wobei die Antenne (22) in das Zylinderinnere (15) abstrahlt und der Zylinder (14) einen Mikrowellenleiter bildet und der Kolben (12) ausgebildet ist, die Strahlung (24) zu reflektieren und die Antenne (22) ausgebildet ist, die reflektierte Strahlung (26) zu empfangen,
- einer außerhalb des Zylinderinneren (15) angeordneten Steuer- und Auswerteelektronik (28), zur Ansteuerung der Antenne (22) und zur Auswertung der von der Antenne (22) empfangenen Strahlung (26),
**dadurch gekennzeichnet, dass**
zwischen dem Zylinderinneren (15) und der Steuer- und Auswerteelektronik (28) eine galvanische Trennung (32) vorgesehen ist, die mittels feldgebundener Kopplung signaltechnisch überbrückt ist und zylinderinnenseitig der Kopplung der Zylinderinnendruck und außenseitig der Kopplung Umgebungsdruck herrscht.

2. Positionsmesssystem nach Anspruch 1, **dadurch gekennzeichnet, dass** die Trennung durch ein zwischen Antenne und dem Zylinderinneren vorgesehenes Dielektrikum erfolgt.

3. Positionsmesssystem nach Anspruch 2, **dadurch gekennzeichnet, dass** das Dielektrikum bereichsweise eine kegelförmige Form aufweist, wobei die Kegelspitze in das Zylinderinnere gerichtet ist.

4. Positionsmesssystem nach Anspruch 1, **dadurch gekennzeichnet, dass** die Trennung zwischen Antenne und Steuer- und Auswerteelektronik vorgesehen ist.

5. Positionsmesssystem nach Anspruch 4, **dadurch gekennzeichnet, dass** im Bereich der feldgebundenen Kopplung ein Dielektrikum vorgesehen ist.

6. Positionsmesssystem nach einem der vorhergehenden Ansprüche, **dadurch gekennzeichnet, dass** die feldgebundene Kopplung eine kapazitive Kopplung ist.

7. Positionsmesssystem nach einem der vorhergehenden Ansprüche, **dadurch gekennzeichnet, dass** die Steuer- und Auswerteelektronik in einem Kopf des Zylinders angeordnet ist.
